# EUROPEAN PATENT SPECIFICATION

(11) **EP 3 035 432 B1**
(45) Date of publication and mention of the grant of the patent: **19.09.2018**
(21) Application number: 14847746.6
(22) Date of filing: 05.06.2014
(51) Int. Cl.: H01M 10/058, H01M 10/04, H01M 2/02, H01M 10/0583

(54) **BATTERY CELL BENDING APPARATUS COMPRISING HEATING MEMBER**
BATTERIEZELLENBIEGUNGSVORRICHTUNG MIT EINEM HEIZELEMENT
APPAREIL DE PLIAGE D'ÉLÉMENT DE BATTERIE COMPRENANT UN ÉLÉMENT CHAUFFANT

(30) Priority: 27.09.2013 KR 20130115338
(43) Date of publication of application: 22.06.2016
(73) Proprietor: LG Chem, Ltd., Seoul 07336 (KR)
(72) Inventor: KIM, Hye Jung, Daejeon 34122 (KR); ROH, Hyung Gu, Daejeon 34122 (KR); KIM, Min Su, Daejeon 34122 (KR); JUNG, Tae Yoon, Daejeon 34122 (KR); HAN, Chang Min, Daejeon 34122 (KR)
(74) Representative: Cabinet Plasseraud
(86) International application number: PCT/KR2014/004988
(87) International publication number: WO 2015/046709

(56) References cited:
- CN-C- 100 361 326
- JP-A- 2000 223 083
- JP-A- 2003 031 264
- JP-A- 2005 108 633
- JP-A- 2006 134 604
- JP-A- 2009 187 768
- KR-A- 20120 060 707
- KR-B1- 100 819 977
- US-A1- 2009 035 654

## Description

### [TECHNICAL FIELD]

The present invention relates to a battery cell bending device, and more particularly to a battery cell bending device for bending outer edges of a battery cell configured to have a structure in which an electrode assembly including a positive electrode, a separator, and a negative electrode is mounted in a battery case, and the battery case is sealed by thermal bonding, the battery cell bending device including a base plate, on which the battery cell is loaded, a pair of bending guides inserted respectively between left and right outer edges of a battery case and an outer surface of an electrode assembly receiving part in a state in which the battery cell is loaded on the base plate, pressing rollers for pressing the outer edges of the battery case toward the bending guides to bend the outer edges of the battery case such that the outer edges of the battery case are adjacent to the outer surface of the electrode assembly receiving part, and heating members disposed adjacent to the pressing rollers for heating the bent outer edges of the battery case.

### [BACKGROUND ART]

In recent years, secondary batteries have been increasingly used. In terms of the shape of batteries, the demand for prismatic secondary batteries or pouch-shaped secondary batteries, which are thin enough to be applied to products, such as mobile phones, is very high. In terms of the material for batteries, on the other hand, the demand for lithium secondary batteries, such as lithium ion batteries and lithium ion polymer batteries, which exhibit high energy density, discharge voltage, and output stability, is very high.

In addition, secondary batteries may be classified based on the structure of an electrode assembly having a positive electrode/separator/negative electrode structure. For example, the electrode assembly may be configured to have a jelly-roll (wound) type structure in which a long sheet type positive electrode and a long sheet type negative electrode are wound in a state in which a separator is disposed between the positive electrode and the negative electrode, a stacked type structure in which pluralities of positive electrodes and negative electrodes each having a predetermined size are sequentially stacked in a state in which separators are disposed respectively between the positive electrodes and the negative electrodes, or a stacked/folded type structure in which predetermined numbers of positive electrodes and negative electrodes are sequentially stacked in a state in which separators are disposed respectively between the positive electrodes and the negative electrodes to constitute a bi-cell or a full cell, and then a plurality of bi-cells or full cells is folded using a separation film.

In recent years, much interest has been taken in a pouch-shaped battery configured to have a structure in which such a stacked or stacked/folded type electrode assembly is mounted in a pouch-shaped battery case made of an aluminum laminate sheet because of low manufacturing costs, light weight, easy modification in shape, etc. In addition, the use of such a pouch-shaped battery has gradually increased.

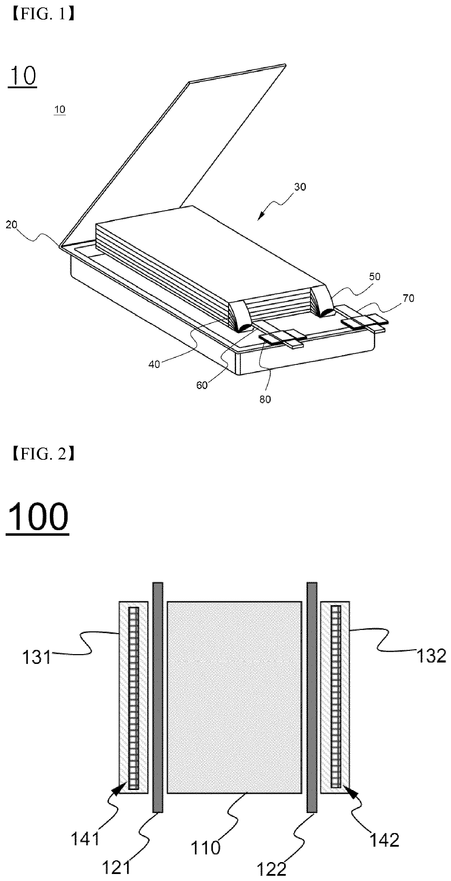

FIG. 1 is an exploded perspective view typically showing a general structure of a conventional representative pouch-shaped secondary battery.

Referring to FIG. 1, a pouch-shaped secondary battery 10 includes an electrode assembly 30, electrode tabs 40 and 50 extending from the electrode assembly 30, electrode leads 60 and 70 connected respectively to the electrode tabs 40 and 50 by welding, and a battery case 20 for receiving the electrode assembly 30.

The electrode assembly 30 is a power generating element including positive electrodes and negative electrodes sequentially stacked in a state in which separators are disposed respectively between the positive electrodes and the negative electrodes. The electrode assembly 30 is configured to have a stacked type structure or a stacked/folded type structure. The electrode tabs 40 and 50 extend from corresponding electrode plates of the electrode assembly 30. The electrode leads 60 and 70 are electrically connected to the electrode tabs 40 and 50, extending from the corresponding electrode plates of the electrode assembly 30, respectively, for example, by welding. The electrode leads 60 and 70 are partially exposed outward from the battery case 20. In addition, insulating films 80 for improving sealability between the battery case 20 and the electrode leads 60 and 70 and, at the same time, securing electrical insulation between the battery case 20 and the electrode leads 60 and 70 are partially attached to the upper and lower surfaces of the electrode leads 60 and 70.

The battery case 20 is made of an aluminum laminate sheet. The battery case 20 has a space defined therein to receive the electrode assembly 30. The battery case 20 is formed generally in the shape of a pouch. In a case in which the electrode assembly 30 is a stacked type electrode assembly as shown in FIG. 1, the inner upper end of the battery case 20 is spaced apart from the electrode assembly 30 such that the positive electrode tabs 40 and the negative electrode tabs 50 can be coupled to the electrode leads 60 and 70, respectively.

The pouch-shaped battery with the above-stated construction is manufactured by receiving the electrode assembly in the battery case made of the laminate sheet, pouring an electrolytic solution into the battery case, sealing the battery case by thermal bonding, receiving the battery cell in a bending device in order to perpendicularly bend the outer edge or the thermally bonded portion (i.e. the sealed portion) of the battery cell such that the bent outer edge of the bent sealed portion comes into tight contact with the side wall of a receiving part of the battery case, and pressing the sealed portion to bend the sealed portion using the bending device. In a case in which the sealed portion is bent using the bending device, however, the bent region of the sealed portion returns to the original state thereof as time passes. As a result, errors occur in designing the dimensions of the battery cell. For this reason, it is necessary to carry out the above-described process again.

Therefore, there is a high necessity for a technology that is capable of fundamentally solving problems caused in a case in which a sealed portion of a pouch-shaped battery is bent.

JP 2000 223083 A relates to a case forming method for polymer battery and case forming device.

JP 2003 031264 A relates to a thin plate folding method, its device and manufacturing method of lithium ion secondary battery.

### [DISCLOSURE]

### [TECHNICAL PROBLEM]

Therefore, the present invention has been made to solve the above problems, and other technical problems that have yet to be resolved.

That is, it is an object of the present invention to provide a battery cell bending device including heating members for heating the outer edges of a battery cell in a process of perpendicularly bending the outer edges of the battery cell such that the outer edges of the battery cell tightly contact side walls of an electrode assembly receiving part, whereby it is possible to prevent the occurrence of errors in designing the dimensions of the battery cell, which may be caused due to restoration of the bent regions of the outer edges of the battery cell over time.

It is another object of the present invention to provide a battery cell bending method that is capable of simplifying a conventional bending process, preventing the deterioration in external appearance of a battery cell, achieving a high yield rate, and enabling easy manufacture of the battery cell.

### [TECHNICAL SOLUTION]

In accordance with one aspect of the present invention, the above and other objects can be accomplished by the provision of a battery cell bending device as defined in the attached set of claims for bending outer edges of a battery cell configured to have a structure in which an electrode assembly including a positive electrode, a separator, and a negative electrode is mounted in a battery case, and the battery case is sealed by thermal bonding, the battery cell bending device including a base plate, on which the battery cell is loaded, a pair of bending guides inserted respectively between left and right outer edges of a battery case and an outer surface of an electrode assembly receiving part in a state in which the battery cell is lo aded on the base plate, pressing rollers for pressing the outer edges of the battery case toward the bending guides to bend the outer edges of the battery case such that the outer edges of the battery case are adjacent to the outer surface of the electrode assembly receiving part, and heating members disposed adjacent to the pressing rollers for heating the bent outer edges of the battery case.

The battery cell bending device according to the present invention includes heating members for heating the outer edges of a battery cell in a process of perpendicularly bending the outer edges of the battery cell such that the outer edges of the battery cell tightly contact side walls of an electrode assembly receiving part. Consequently, the outer edges of the battery cell is bent and, at the same time, heated, whereby it is possible to prevent the occurrence of errors in designing the dimensions of the battery cell, which may be caused due to restoration of the bent regions of the outer edges of the battery cell over time.

The electrode assembly is not particularly restricted so long as a plurality of electrode tabs is connected to constitute a positive electrode and a negative electrode. For example, the electrode assembly may be configured to have a folded type structure, a stacked type structure, or a stacked/folded type structure. The details of the stacked/folded type electrode assembly are disclosed in Korean Patent Application Publication No. 2001-0082058, No. 2001-0082059, and No. 2001-0082060, which have been filed in the name of the applicant of the present patent application.

The battery cell bending device according to the present invention may be preferably applied to a pouch-shaped secondary battery having an electrode assembly mounted in a receiving part of a pouch-shaped battery case made of a laminate sheet, such as an aluminum laminate sheet, including a metal layer and a resin layer.

In a concrete example, the bending guides may be configured to have a structure in which the distance between the bending guides is adjustable in response to the size of the battery cell. In this structure, it is possible to stably bend battery cells having various sizes.

In the present invention, the bending guides are configured to have a structure in which a cross section of each of the bending guides gradually decreases in a direction in which the bending guides are inserted respectively between the outer edges of the battery case and the outer surface of the electrode assembly receiving part. In this structure, the outer edges of the battery case may be bent such that at the outer edges of the battery cell tightly contact the outer surface of the electrode assembly receiving part, and desired positions to be bent may be guided. Specifically, each of the bending guides is formed to have a triangular shape in vertical section.

Each of the heating members may be provided with a temperature controller for controlling a heating temperature. The optimum temperature for heating the bent regions may be set, and heating may be carried out simultaneously with pressing.

In addition, the battery cell according to the present invention may be preferably applied to a lithium secondary battery, such as a lithium ion secondary battery having an electrode assembly impregnated with an electrolytic solution containing lithium or a lithium ion polymer battery having an electrode assembly impregnated with an electrolytic solution containing lithium in a gel state.

For reference, a lithium secondary battery includes a positive electrode, a negative electrode, a separator, and a non-aqueous electrolytic solution containing lithium salt.

The positive electrode may be manufactured, for example, by applying a mixture of a positive electrode active material, a conductive agent, and a binder to a positive electrode current collector and drying the mixture. A filler may be further added to the mixture as needed.

The positive electrode active material may be, but is not limited to, a layered compound, such as a lithium cobalt oxide (LiCoO₂) or a lithium nickel oxide (LiNiO₂), or a compound replaced by one or more transition metals; a lithium manganese oxide represented by a chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, LiFe₃O₄, V₂O₅, or Cu₂V₂O₇; an Ni-sited lithium nickel oxide represented by a chemical formula LiNi₁₋ₓMₓO₂ (where M= Co, Mn, Al, Cu, Fe, Mg, B, or Ga, and x = 0.01 to 0.3); a lithium manganese composite oxide represented by a chemical formula LiMn₂₋ₓMₓO₂ (where M= Co, Ni, Fe, Cr, Zn, or Ta, and x = 0.01 to 0.1) or a chemical formula Li₂Mn₃MO₈ (where M= Fe, Co, Ni, Cu, or Zn); LiMn₂O₄ having Li of a chemical formula partially replaced by alkaline earth metal ions; a disulfide compound; or Fe₂(MoO₄)₃.

The conductive agent is generally added so that the conductive agent has 1 to 30 weight % based on the total weight of the compound including the positive electrode active material. The conductive agent is not particularly restricted so long as the conductive agent exhibits high conductivity while the conductive agent does not induce any chemical change in a battery to which the conductive agent is applied. For example, graphite, such as natural graphite or artificial graphite; carbon black, such as carbon black, acetylene black, Ketjen black, channel black, furnace black, lamp black, or summer black; conductive fiber, such as carbon fiber or metallic fiber; metallic powder, such as carbon fluoride powder, aluminum powder, or nickel powder; conductive whisker, such as zinc oxide or potassium titanate; conductive metal oxide, such as titanium oxide; or conductive materials, such as polyphenylene derivatives may be used as the conductive agent.

The binder is a component assisting in binding between the active material and the conductive agent and in binding with the current collector. The binder is generally added in an amount of 1 to 30 weight % based on the total weight of the compound including the positive electrode active material. As examples of the binder, there may be used polyvinylidene fluoride, polyvinyl alcohol, carboxymethylcellulose (CMC), starch, hydroxypropylcellulose, regenerated cellulose, polyvinyl pyrollidone, tetrafluoroethylene, polyethylene, polypropylene, ethylene-propylene-diene terpolymer (EPDM), sulfonated EPDM, styrene butadiene rubber, fluoro rubber, and various copolymers.

The filler is an optional component used to inhibit expansion of the positive electrode. There is no particular limit to the filler so long as it does not cause chemical changes in a battery to which the filler is applied and is made of a fibrous material. As examples of the filler, there may be used olefin polymers, such as polyethylene and polypropylene; and fibrous materials, such as glass fiber and carbon fiber.

On the other hand, the negative electrode may be manufactured by applying and drying a negative electrode active material to a negative electrode current collector. The above-described components may be selectively added to the negative electrode active material as needed.

As the negative electrode active material, for example, there may be used carbon, such as non-graphitizing carbon or a graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2 and 3 elements of the periodic table, halogen; 0≤x≤1; 1≤y≤3; 1≤z≤8); lithium metal; lithium alloy; silicon-based alloy; tin-based alloy; metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; conductive polymer, such as polyacetylene; or a Li-Co-Ni based material.

The separator is interposed between the positive electrode and the negative electrode. As the separator, for example, an insulative thin film exhibiting high ion permeability and high mechanical strength may be used. The separator generally has a pore diameter of 0.01 to 10 *µ*m and a thickness of 5 to 300 *µ*m. As the material for the separator, for example, a sheet or non-woven fabric made of olefin polymer, such as polypropylene, which exhibits chemical resistance and hydrophobicity, glass fiber, or polyethylene is used. In a case in which a solid electrolyte, such as polymer, is used as an electrolyte, the solid electrolyte may also function as the separator.

The non-aqueous electrolytic solution containing lithium salt is composed of a polar organic electrolytic solution and lithium salt. As the electrolytic solution, a non-aqueous liquid electrolytic solution, an organic solid electrolyte, or an inorganic solid electrolyte may be used.

As examples of the non-aqueous liquid electrolytic solution, mention may be made of non-protic organic solvents, such as N-methyl-2-pyrollidinone, propylene carbonate, ethylene carbonate, butylene carbonate, dimethyl carbonate, diethyl carbonate, gamma-butyro lactone, 1,2-dimethoxy ethane, tetrahydroxy Franc, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate.

As examples of the organic solid electrolyte, mention may be made of polyethylene derivatives, polyethylene oxide derivatives, polypropylene oxide derivatives, phosphoric acid ester polymers, poly agitation lysine, polyester sulfide, polyvinyl alcohols, polyvinylidene fluoride, and polymers containing ionic dissociation groups.

As examples of the inorganic solid electrolyte, mention may be made of nitrides, halides, and sulphates of lithium (Li), such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, and Li₃PO₄-Li₂S-SiS₂.

The lithium salt is a material that is readily soluble in the above-mentioned non-aqueous electrolyte, and may include, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloroborane lithium, lower aliphatic carboxylic acid lithium, lithium tetraphenyl borate, and imide.

In addition, in order to improve charge and discharge characteristics and flame retardancy, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride, or the like may be added to the non-aqueous electrolytic solution. According to circumstances, in order to impart incombustibility, the non-aqueous electrolytic solution may further include halogen-containing solvents, such as carbon tetrachloride and ethylene trifluoride. Furthermore, in order to improve high-temperature retention characteristics, the non-aqueous electrolytic solution may further include carbon dioxide gas.

In accordance with another aspect of the present invention, there is provided a method of bending outer edges of a battery cell using the battery cell bending device with the above-stated construction, the battery cell bending method including (a) a first bending process for positioning the battery cell on the battery cell bending device and bending outer edges of the battery cell, (b) a second bending process for adjusting the distance between bending guides and pressing the outer edges of the battery cell, and (c) a third bending process for positioning heating members on the outer edges of the battery cell and bending the outer edges of the battery cell simultaneously with heating the outer edges of the battery cell in a state in which the outer edges of the battery cell is pressed by the bending guides.

In a concrete example, process (c) may be carried out at a heating temperature of 150 °C to 190 °C, preferably 170 °C to 190 °C.

If the heating temperature is too low, it is not possible to effectively restrain the restoration of the bent regions, which is not desirable. On the other hand, if the heating temperature is too high, a battery case, which is made of a laminate sheet including a resin layer and a metal layer, may be thermally damaged, which is also not desirable.

Specifically, process (c) may be carried out for a heating time of 1 to 3 seconds. In a state in which the outer edges of the battery cell are pressed by the bending guides, the heating members may be located on the outer edges of the battery cell in order to bend the outer edges of the battery cell simultaneously with heating the outer edges of the battery cell twice at an interval of 1.5 seconds.

In accordance with a further aspect of the present invention, there is provided a battery pack including a battery cell having outer edges bent using the battery cell bending method as described above.

The battery pack may be used as a battery cell which is used as a power source of a small-sized device. In addition, the battery pack may be preferably used as a unit cell of a battery pack including a plurality of battery cells that is used as a power source of a device.

In a preferred example, the device may be a mobile phone, a portable computer, a smart phone, a tablet PC, a smart pad, a netbook computer, a light electronic vehicle (LEV), an electric vehicle, a hybrid electric vehicle, a plug-in hybrid electric vehicle, or a power storage apparatus. However, the present invention is not limited thereto.

### [BRIEF DESCRIPTION OF DRAWINGS]

The above and other objects, features and other advantages of the present invention will be more clearly understood from the following detailed description taken in conjunction with the accompanying drawings, in which:
FIG. 1 is an exploded perspective showing a general structure of a conventional pouch-shaped battery;
FIG. 2 is a typical view showing a battery cell bending device according to an embodiment of the present invention;
FIGS. 3 to 5 are typical views showing the sequence of a method according to an embodiment of the present invention; and
FIG. 6 is a graph showing a restoration degree of a bent region according to experimental example 1.

### [DETAILED DESCRIPTION OF THE INVENTION]

Now, exemplary embodiments of the present invention will be described in detail with reference to the accompanying drawings. It should be noted, however, that the scope of the present invention is not limited by the illustrated embodiments.

FIG. 2 is a typical view showing a battery cell bending device according to an embodiment of the present invention.

Referring to FIG. 2, a battery cell bending device 100 according to the present invention includes a base plate 110, on which a battery cell is loaded, a pair of bending guides 121 and 123 inserted respectively between left and right outer edges of a battery case and the outer surface of an electrode assembly receiving part in a state in which the battery cell is loaded on the base plate 110, pressing rollers 131 and 132 for pressing the outer edges of the battery case toward the bending guides 121 and 123 to bend the outer edges of the battery case such that the outer edges of the battery case are adjacent to the outer surface of the electrode assembly receiving part, and heating members 141 and 142 disposed adjacent to the pressing rollers 131 and 132 for heating the bent outer edges of the battery case.

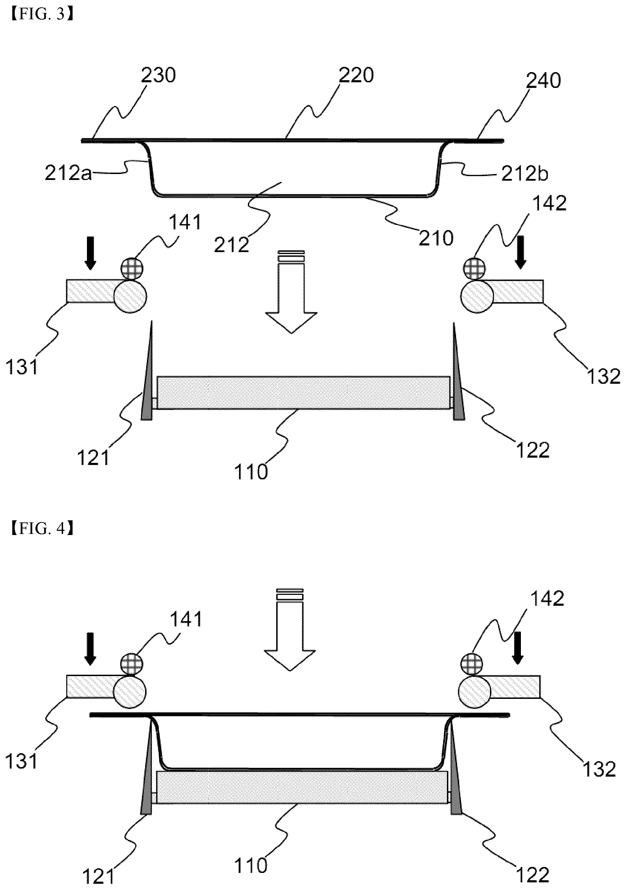

FIGS. 3 to 5 are typical views showing the sequence of a method according to an embodiment of the present invention.

Referring to these figures, first, a battery cell 200 is manufactured by placing an electrode assembly (not shown) having a positive electrode/separator/negative electrode structure in a receiving part 212 of a first sheet type case 210 and connecting the first sheet type case 210 to a second sheet type case 220 by thermal bonding. During thermal bonding, sealed portions 230 and 240 are formed at the outer edges of the receiving part 212. The first sheet type case 210 and the second sheet type case 220 may be integrally formed using a single member. Alternatively, the first sheet type case 210 and the second sheet type case 220 may be individually formed using two separate members.

Subsequently, the battery cell 200 is loaded on the base plate 110 formed at the battery cell bending device 100, the sealed portions 230 and 240 are fixed by the bending guides 121 and 122, respectively, and the pressing rollers 131 and 132 move downward to bend the sealed portions 230 and 240 perpendicularly downward. At this time, the sealed portions 230 and 240 of the battery cell 200 are heated by the heating members 141 and 142 mounted adjacent to the pressing rollers 131 and 132 simultaneously when the sealed portions 230 and 240 are bent by the pressing rollers 131 and 132, respectively. As a result, the bent regions of the sealed portions 230 and 240 tightly contact side walls 212a and 212b of the battery cell 200, respectively.

Now, the present invention will be described in more detail with reference to the following examples. It should be noted, however, that the scope of the present invention is not limited by the examples.

### Manufacture of a battery cell

95 weight % of Li₂CoO₂ as a positive electrode active material, 2.5 weight % of Super-P (a conductive agent), and 2.5 weight % of PVdF (a binder) were added to NMP (N-methyl-2-pyrrolidone) as a solvent to prepare a positive electrode mixture slurry, and 95 weight % of artificial graphite as a negative electrode active material, 2.5 weight % of Super-P (a conductive agent), 2.5 weight % of PVdF (a binder) were added to NMP as a solvent to prepare a negative electrode mixture slurry. Subsequently, the positive electrode mixture slurry was coated, dried, pressed over one surface of aluminum foil to manufacture a positive electrode, and the negative electrode mixture slurry was coated, dried, pressed over one surface of copper foil to manufacture a negative electrode.

Cell Guard™ was used as a separator. The positive electrode, the negative electrode, and the separator were sequentially stacked to constitute an electrode assembly. The electrode assembly was placed in a battery case made of a laminate sheet, an electrolytic solution was poured into the battery case, and the battery case was sealed to manufacture a battery cell.

### Construction of a battery cell bending device

A battery cell bending device for bending the outer edges of a battery cell configured to have a structure in which an electrode assembly including a positive electrode, a separator, and a negative electrode is mounted in a battery case, and the battery case is sealed by thermal bonding was constructed. The battery cell bending device was configured to include a base plate, on which the battery cell is loaded, a pair of bending guides inserted respectively between left and right outer edges of a battery case and the outer surface of an electrode assembly receiving part in a state in which the battery cell is loaded on the base plate, pressing rollers for pressing the outer edges of the battery case toward the bending guides to bend the outer edges of the battery case such that the outer edges of the battery case are adjacent to the outer surface of the electrode assembly receiving part, and heating members disposed adjacent to the pressing rollers for heating the bent outer edges of the battery case.

### <Example 1>

The outer edges of the battery case of the battery cell manufactured as described above were bent using the battery cell bending device. At this time, the outer edges of the battery case were pressed twice at an interval of 1.5 seconds while being heated by the heating members at a temperature of 150 °C to manufacture a battery cell having bent outer edges.

### <Example 2>

A battery cell was manufactured in the same manner as in Example 1 except that the temperature of the heating members was set to 180 °C.

### <Comparative example 1>

A battery cell was manufactured in the same manner as in Example 1 except that the temperature of the heating members was set to 25 °C.

### <Experimental example 1>

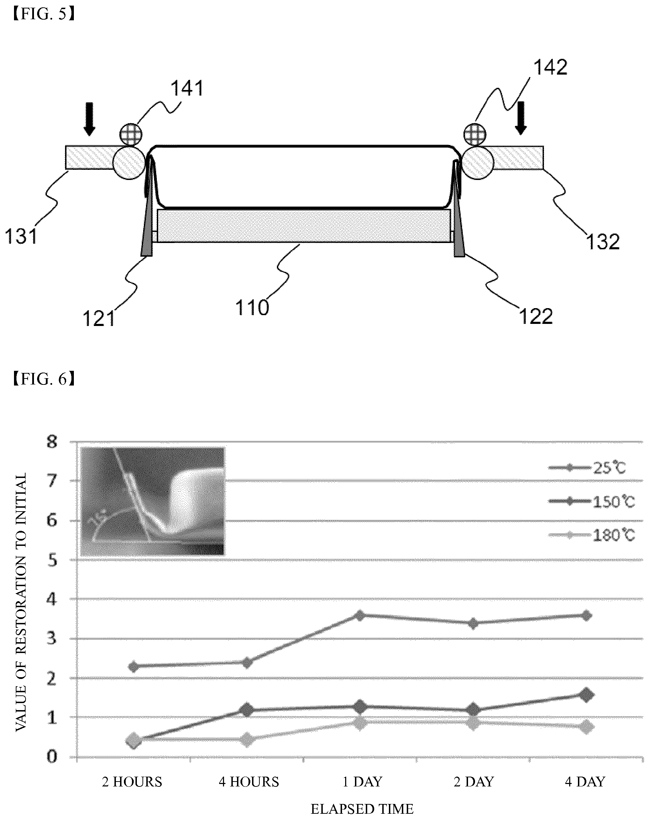

A restoration degree of the bent regions of the battery cells manufactured according to Examples 1 and 2 and Comparative example 1 was measured over time. The measurement results are shown in Table 1 and FIG. 6.

**[Table 1]**

| | Restoration degree over elapsed time | | | | |
|---|---|---|---|---|---|
| | 2 hours | 4 hours | 1 day | 2 days | 4 days |
| Example 1 | 0.4 | 1.2 | 1.3 | 1.2 | 1.6 |
| Example 2 | 0.4 | 0.4 | 0.9 | 0.9 | 0.8 |
| Comparative example 1 | 2.3 | 2.4 | 3.6 | 3.4 | 3.6 |

It can be seen from Table 1 and FIG. 6 that the restoration degree of the bent regions over time was not great for the battery cell of Example 1, whereas the restoration degree of the bent regions over time was relatively great for the battery cell of Comparative example 1. It reveals that, in a case in which the battery cell bending device including the heating members are used when the outer edges of the battery cell are perpendicularly bent such that the outer edges of the battery cell tightly contact side walls of the electrode assembly receiving part, restoration of the bent regions over time is restrained. In addition, it reveals that an excellent restraining effect is achieved at a heating temperature of 150 °C to 180 °C.

Although the exemplary embodiments of the present invention have been disclosed for illustrative purposes, those skilled in the art will appreciate that various modifications, additions and substitutions are possible, without departing from the scope of the invention as disclosed in the accompanying claims.

### [INDUSTRIAL APPLICABILITY]

As is apparent from the above description, the battery cell bending device according to the present invention includes heating members for heating the outer edges of a battery cell in a process of perpendicularly bending the outer edges of the battery cell such that the outer edges of the battery cell tightly contact side walls of an electrode assembly receiving part. Consequently, the outer edges of the battery cell is bent and, at the same time, heated, whereby it is possible to fundamentally prevent the occurrence of errors in designing the dimensions of the battery cell, which may be caused due to restoration of the bent regions of the outer edges of the battery cell over time.

## Claims

1. A battery cell bending device (100) for bending outer edges of a battery cell configured to have a structure in which an electrode assembly comprising a positive electrode, a separator, and a negative electrode is mounted in a battery case, and the battery case is sealed by thermal bonding, the battery cell bending device (100) comprising:
a base plate (110), on which the battery cell is loadable;
a pair of bending guides (121, 122) disposed on two opposite outer edges of the base plate (100) to be inserted respectively between left and right outer edges of battery case and an outer surface of an electrode assembly receiving part in a state in which the battery cell is loaded on the base plate;
pressing rollers (131, 132) for pressing the outer edges of the battery case toward the bending guides (121, 122) to bend the outer edges of the battery case such that the outer edges of the battery case are adjacent to the outer surface of the electrode assembly receiving part; and
heating members (141, 142) disposed adjacent to the pressing rollers (131, 132) for heating the bent outer edges of the battery case,
wherein each of the bending guides (121, 122) is formed to have a triangular shape in vertical section in which the bending guides (121, 122) are inserted respectively between the outer edges of the battery case and the outer surface of the electrode assembly receiving part and the bending guides (121, 123) are configured to have a structure in which a cross section of each of the bending guides (121, 123) gradually decreases in a direction in which the bending guides (121, 123) are inserted.

2. The battery cell bending device (100) according to claim 1, wherein the bending guides (121, 122) are configured to have a structure in which a distance between the bending guides (121, 122) is adjustable in response to a size of the battery cell.

3. The battery cell bending device (100) according to claim 1, wherein each of the heating members (141, 142) is provided with a temperature controller for controlling a heating temperature.

4. A method of bending outer edges of a battery cell using a battery cell bending device (100) according to any one of claims 1 to 3, the battery cell bending method comprising:
(a) a first bending process for positioning the battery cell on the battery cell bending device (100) and bending outer edges of the battery cell;
(b) a second bending process for adjusting a distance between bending guides (121, 122) and pressing the outer edges of the battery cell; and
(c) a third bending process for positioning heating members (141, 142) on the outer edges of the battery cell and bending the outer edges of the battery cell simultaneously with heating the outer edges of the battery cell in a state in which the outer edges of the battery cell is pressed by the bending guides (121, 122).

5. The battery cell bending method according to claim 4, wherein process (c) is carried out at a heating temperature of 150 °C to 190 °C.

6. The battery cell bending method according to claim 5, wherein process (c) is carried out at a heating temperature of 170 °C to 190 °C.

7. The battery cell bending method according to claim 4, wherein process (c) is carried out for a heating time of 1 to 3 seconds.

8. The battery cell bending method according to claim 7, wherein heating in process (c) is carried out twice at an interval of 1.5 seconds.

## Patentansprüche

1. Batteriezellen-Biegevorrichtung (100) zum Biegen von äußeren Rändern einer Batteriezelle, welche dazu eingerichtet ist, eine Struktur aufzuweisen, in welcher eine Elektrodenanordnung, umfassend eine positive Elektrode, einen Separator und eine negative Elektrode, in einem Batteriegehäuse angebracht ist, und wobei das Batteriegehäuse durch thermisches Verbinden abgedichtet ist, wobei die Batteriezellen-Biegevorrichtung (100) umfasst:
eine Basisplatte (110), an welcher die Batteriezelle bestückbar ist;
ein Paar von Biegeführungen (121, 122), welche an zwei entgegengesetzten äußeren Rändern der Basisplatte (100) angeordnet sind, um jeweils zwischen linke und rechte äußere Ränder des Batteriegehäuses und einer äußeren Fläche eines Elektrodenanordnung-Aufnahmeteils in einem Zustand eingesetzt zu werden, in welchem die Batteriezelle an der Basisplatte bestückt ist;
Pressrollen (131, 132) zum Pressen der äußeren Ränder des Batteriegehäuses in Richtung der Biegeführungen (121, 122), um die äußeren Ränder des Batteriegehäuses derart zu biegen, dass die äußeren Ränder des Batteriegehäuses der äußeren Fläche des Elektrodenanordnung-Aufnahmeteils benachbart sind; und
Heizelemente (141, 142), welche den Pressrollen (131, 132) benachbart angeordnet sind, zum Erwärmen der gebogenen äußeren Ränder des Batteriegehäuses,
wobei jede der Biegeführungen (121, 122) ausgebildet ist, eine dreieckige Form in einem vertikalen Querschnitt aufzuweisen, in welche die Biegeführungen (121, 122) jeweils zwischen die äußeren Ränder des Batteriegehäuses und die äußere Fläche des Elektrodenanordnung-Aufnahmeteils eingesetzt sind und die Biegeführungen (121, 123) dazu eingerichtet sind, eine Struktur aufzuweisen, in welcher ein Querschnitt von jeder der Biegeführungen (121, 123) in einer Richtung graduell abnimmt, in welcher die Biegeführungen (121, 123) eingesetzt werden.

2. Batteriezellen-Biegevorrichtung (100) nach Anspruch 1, wobei die Biegeführungen (121, 122) dazu eingerichtet sind, eine Struktur aufzuweisen, in welcher ein Abstand zwischen den Biegeführungen (121, 122) in Reaktion auf eine Größe der Batteriezelle einstellbar ist.

3. Batteriezellen-Biegevorrichtung (100) nach Anspruch 1, wobei jedes der Heizelemente (141, 142) mit einer Temperatur-Regel-/Steuereinheit zum Regeln/Steuern einer Heiztemperatur versehen ist.

4. Verfahren zum Biegen von äußeren Rändern einer Batteriezelle unter Verwendung einer Batteriezellen-Biegevorrichtung (100) nach einem der Ansprüche 1 bis 3, wobei das Batteriezellen-Biegeverfahren umfasst:
(a) einen ersten Biegeprozess zum Positionieren der Batteriezelle an der Batteriezellen-Biegevorrichtung (100) und Biegen von äußeren Rändern der Batteriezelle;
(b) einen zweiten Biegeprozess zum Einstellen eines Abstands zwischen Biegeführungen (121, 122) und Pressen der äußeren Ränder der Batteriezelle; und
(c) einen dritten Biegeprozess zum Positionieren von Heizelementen (141, 142) an den äußeren Rändern der Batteriezelle und Biegen der äußeren Ränder der Batteriezelle gleichzeitig mit einem Erwärmen der äußeren Ränder der Batteriezelle in einem Zustand, in welchem die äußeren Ränder der Batteriezelle durch die Biegeführungen (121, 122) gepresst werden.

5. Batteriezellen-Biegeverfahren nach Anspruch 4, wobei der Prozess (c) bei einer Temperatur von 150°C bis 190°C ausgeführt wird.

6. Batteriezellen-Biegeverfahren nach Anspruch 5, wobei der Prozess (c) bei einer Heiztemperatur von 170°C bis 190°C ausgeführt wird.

7. Batteriezellen-Biegeverfahren nach Anspruch 4, wobei der Prozess (c) für eine Heizzeit von 1 bis 3 Sekunden ausgeführt wird.

8. Batteriezellen-Biegeverfahren nach Anspruch 7, wobei ein Erwärmen in Prozess (c) in einem Intervall von 1,5 Sekunden zweimal ausgeführt wird.

## Revendications

1. Appareil de pliage d'élément de batterie (100) pour plier des bords extérieurs d'un élément de batterie configuré pour avoir une structure dans laquelle un ensemble d'électrodes comprenant une électrode positive, un séparateur, et une électrode négative, est monté dans un boîtier de batterie, et le boîtier de batterie est scellé par pliage thermique, l'appareil de pliage d'élément de batterie (100) comprenant :
une plaque de base (110), sur laquelle l'élément de batterie peut être chargé ;
une paire de guides de pliage (121, 122) placés sur deux bords extérieurs opposés de la plaque de base (100) devant être insérés respectivement entre des bords extérieurs gauche et droit du boîtier de batterie et une surface extérieure d'une partie de réception d'ensemble d'électrodes dans un état où l'élément de batterie est chargé sur la plaque de base ;
des rouleaux presseurs (131, 132) pour presser les bords extérieurs du boîtier de batterie vers les guides de pliage (121, 122), pour plier les bords extérieurs du boîtier de batterie de sorte que les bords extérieurs du boîtier de batterie soient adjacents à la surface extérieure de la partie de réception d'ensemble d'électrodes ; et
des éléments chauffants (141, 142) placés adjacents aux rouleaux presseurs (131, 132), pour chauffer les bords extérieurs pliés du boîtier de batterie,
dans lequel chacun des guides de pliage (121, 122) est formé de sorte à avoir une forme triangulaire dans une section verticale dans laquelle les guides de pliage (121, 122) sont insérés respectivement entre les bords extérieurs du boîtier de batterie et la surface extérieure de la partie de réception d'ensemble d'électrodes, et les guides de pliage (121, 123) sont configurés de sorte à avoir une structure dans laquelle une section transversale de chacun les guides de pliage (121, 123) diminue progressivement dans une direction dans laquelle les guides de pliage (121, 123) sont insérés.

2. Appareil de pliage d'élément de batterie (100) selon la revendication 1, dans lequel les guides de pliage (121, 122) sont configurés de sorte à avoir une structure dans laquelle une distance entre les guides de pliage (121, 122) est ajustable en réponse à une taille de l'élément de batterie.

3. Appareil de pliage d'élément de batterie (100) selon la revendication 1, dans lequel chacun des éléments chauffants (141, 142) comprend un contrôleur de température, pour contrôler une température de chauffage.

4. Procédé de pliage des bords extérieurs d'un élément de batterie au moyen d'un appareil de pliage d'élément de batterie (100) selon l'une quelconque des revendications 1 à 3, le procédé de pliage d'élément de batterie comprenant :
(a) un premier processus de pliage pour placer l'élément de batterie sur l'appareil de pliage d'élément de batterie (100) et plier des bords extérieurs de l'élément de batterie ;
(b) un deuxième processus de pliage pour ajuster une distance entre des guides de pliage (121, 122) et presser les bords extérieurs de l'élément de batterie ; et
(c) un troisième processus de pliage pour placer des éléments chauffants (141, 142) sur les bords extérieurs de l'élément de batterie et plier les bords extérieurs de l'élément de batterie tout en chauffant les bords extérieurs de l'élément de batterie dans un état où les bords extérieurs de l'élément de batterie sont pressés par les guides de pliage (121, 122).

5. Procédé de pliage d'élément de batterie selon la revendication 4, dans lequel le processus (c) est exécuté à une température de chauffage de 150 °C à 190 °C.

6. Procédé de pliage d'élément de batterie selon la revendication 5, dans lequel le processus (c) est exécuté à une température de chauffage de 170 °C à 190 °C.

7. Procédé de pliage d'élément de batterie selon la revendication 4, dans lequel le processus (c) est exécuté durant une période de chauffage de 1 à 3 secondes.

8. Procédé de pliage d'élément de batterie selon la revendication 7, dans lequel le chauffage dans le processus (c) est exécuté à deux reprises à un intervalle de 1,5 seconde.
